# EUROPÄISCHE PATENTSCHRIFT

(11) **EP 0 681 662 B1**
(45) Veröffentlichungstag und Bekanntmachung des Hinweises auf die Patenterteilung: **12.06.1996**
(21) Anmeldenummer: 94904962.1
(22) Anmeldetag: 21.01.1994
(51) Int. Cl.: F16D 55/00, F16D 65/00, F16D 65/16

(54) **BEFESTIGUNGSVORRICHTUNG FÜR SCHEIBENBREMSEN**
FIXING DEVICE FOR DISC BRAKES
DISPOSITIF DE FIXATION POUR FREINS A DISQUES

(30) Priorität: 05.02.1993 DE 4303417
(43) Veröffentlichungstag der Anmeldung: 15.11.1995
(73) Patentinhaber: KNORR-BREMSE SYSTEME FÜR NUTZFAHRZEUGE GmbH, 80809 München (DE)
(72) Erfinder: BIEKER, Dieter, D-81827 München (DE); WERTH, Michael, D-81739 München (DE)
(86) Internationale Anmeldenummer: DE9400059
(87) Internationale Veröffentlichungsnummer: WO9418470

(56) Entgegenhaltungen:
- DE-A- 4 126 194
- GB-A- 2 173 268
- GB-A- 2 225 396

## Beschreibung

Die Erfindung bezieht sich auf eine Befestigungsvorrichtung für Scheibenbremsen gemäß dem Oberbegriff des Anspruchs 1, die insbesondere, jedoch nicht ausschließlich, für Straßenfahrzeuge und vorzugsweise für Nutzfahrzeuge vorgesehen ist. Eine derartige Befestigungsvorrichtung ist beispielsweise aus GB-A-2 173 268 bekannt.

Scheibenbremsen bestehen bekanntlich im wesentlichen aus zwei Hauptkomponenten, nämlich aus der mit der betreffenden Fahrzeugachse gekoppelten Bremsscheibe sowie aus der diese Bremsscheibe übergreifenden Zuspannvorrichtung, die bei Betätigung der Bremse zwei Bremsbacken gegen die Reib- oder Kontaktflächen der Bremsscheibe drückt. Üblicherweise wird diese Zuspannvorrichtung am Fahrzeug mit Hilfe eines Bremsenträgers befestigt, der die Fahrzeugachse in unmittelbarer Nähe der Bremsscheibe übergreift und an seinen beiden Enden zwei ebene Anflanschflächen aufweist, die so geformt sind, daß zwei zugeordnete, gleichfalls ebene Befestigungsflächen der Zuspannvorrichtung mit diesen Anflanschflächen in Anlage gebracht werden können.

In jeder Anflanschfläche ist mindestens eine Bohrung oder ein Innengewinde ausgebildet, wobei bei genauer Ausrichtung der Zuspannvorrichtung auf dem Bremsenträger jede Bohrung bzw. jedes Innengewinde mit einem entsprechenden Innengewinde bzw. einer entsprechenden Bohrung der Befestigungsfläche der Zuspannvorrichtung fluchtet, so daß die Zuspannvorrichtung mit Hilfe von Schrauben lösbar am Bremsenträger befestigt werden kann.

Bei Betätigung der Scheibenbremse müssen die unter Umständen sehr hohen Bremskräfte von der Zuspannvorrichtung über den Bremsenträger auf das Fahrzeug übertragen werden. Diese Kraftübertragung wird bei den bekannten Befestigungsvorrichtungen dadurch erreicht, daß die Schrauben mit so hoher Vorspannung befestigt werden, daß zwischen der jeweiligen Anflanschfläche des Bremsenträgers und der ihr zugeordneten Befestigungsfläche der Zuspannvorrichtung ein Reibschluß auftritt, der in Verbindung mit der jeweiligen Wirkfläche in der Lage ist, die jeweils berechneten Kräfte zu übertragen.

Ein Nachteil dieser bekannten Befestigungsvorrichtung liegt jedoch darin, daß ein eventuelles Lockern der Schrauben zu einer entsprechenden Verringerung der übertragbaren Bremskräfte führt. Da dies im Extremfall zu einem Versagen der Scheibenbremse führen kann, muß durch entsprechende Sicherungselemente, wie Sprengringe oder dergleichen, gegebenenfalls dafür Sorge getragen werden, daß ein derartiges Lockern der Schrauben nicht auftreten kann. Das Vorsehen solcher Sicherungselemente bereitet aufgrund der beengten Einbauverhältnisse in der Regel jedoch Probleme, so daß hierauf meist verzichtet werden muß. Untersuchungen haben darüberhinaus gezeigt, daß bei Zuspannvorrichtungen, die mit derartigen Befestigungsvorrichtungen am Bremsenträger montiert sind, bei Vollbremsungen teilweise erhebliche Verschiebungen der Zuspannvorrichtung auftreten; es kann daher nicht ausgeschlossen werden, daß die Zuspannvorrichtung mit ihren Bremsbacken an der Bremsscheibe verklemmt, so daß die Bremse unter Umständen nicht mehr gelöst werden kann.

Der Erfindung liegt die Aufgabe zugrunde, eine Befestigungsvorrichtung gemäß dem Oberbegriff des Anspruchs 1 derart weiterzubilden, daß unter allen Umständen eine sichere Funktion der Zuspannvorrichtung gewährleistet ist.

Diese Aufgabe wird erfindungsgemäß mit den im Kennzeichnungsteil des Anspruchs 1 angegebenen Maßnahmen gelöst.

Die Erfindung schlägt demnach vor, zumindest in der ablaufseitigen Anflanschfläche des Bremsenträgers einen zusätzlichen Formschluß vorzusehen, der mit der entsprechenden Befestigungsfläche der Zuspannvorrichtung in Eingriff steht. Hierdurch wird erreicht, daß je nach Auslegung bzw. Dimensionierung dieses Formschlusses die gesamten Bremskräfte oder zumindest ein erheblicher Teil hiervon über den Formschluß zum Fahrzeug übertragen werden, so daß der durch die Schrauben gewährleistete Reibungsschluß nur noch eine untergeordnete Rolle spielt bzw. ganz verzichtbar ist. Somit kann ein gewisses Lockern der Schrauben in Kauf genommen werden, ohne daß die sichere Funktion der Bremse hierdurch in irgendeiner Weise beeinträchtigt werde. Weiterhin ist es hierdurch möglich, auf Sicherungselemente für die Schrauben zu verzichten, so daß der Einbau entsprechend vereinfacht wird.

Untersuchungen haben darüberhinaus gezeigt, daß durch den erfindungsgemäßen Formschluß die oben erwähnte Verschiebung der Zuspannvorrichtung weitestgehend ausgeschaltet werden kann, so daß ein Verklemmen der Zuspannvorrichtung ebenfalls kaum möglich ist; die Erfindung erreicht somit eine konstruktiv einfache und dennoch sichere Befestigung der Zuspannvorrichtung, welche die Funktionsfähigkeit der Bremse unter keinen Umständen beeinträchtigt.

Gemäß der im Anspruch 2 angegebenen Weiterbildung der Erfindung kann der erfindungsgemäße zusätzliche Formschluß vorteilhaft aus einer in der betreffenden Anflanschfläche ausgebildeten Verzahnung bestehen, die mit einer spiegelbildlich ausgebildeten Gegenverzahnung der betreffenden Befestigungsfläche der Zuspannvorrichtung in Eingriff steht. Bei einer derartigen Verzahnung ist es gemäß Anspruch 3 weiterhin von Vorteil, die Zähne der Verzahnung der Anflanschfläche und dementsprechend die der Gegenverzahnung im wesentlichen senkrecht zur Hauptrichtung der beim Bremsen auf den Bremsenträger einwirkenden Kräfte verlaufen zu lassen. Alternativ hierzu ist es jedoch gemäß Anspruch 4 auch möglich, die Verzahnung der Anflanschfläche und die der Gegenverzahnung in Form von Kreuzverzahnungen auszubilden.

Unter Umständen ist es gemäß Anspruch 5 ausreichend, die als Formschluß vorgesehenen Verzahnungen lediglich im jeweiligen Umgebungsbereich der Bohrungen bzw. Innengewinde für die Befestigungsschrauben auszubilden. Wenn nun jede Befestigungsfläche der Zuspannvorrichtung mit Hilfe von mindestens zwei Schrauben an der zugeordneten Anflanschfläche des Bremsenträgers befestigt wird, empfiehlt es sich gemäß Anspruch 6, als Formschluß im Umgebungsbereich mindestens zweier dieser Schrauben jeweils Verzahnungen auszubilden, deren Zähne im wesentlichen in einem 45-Grad-Winkel zur Hauptrichtung der beim Bremsen auf den Bremsenträger einwirkenden Kräfte und senkrecht zu denen der jeweils benachbarten Verzahnung verlaufen; hierdurch wird trotz vergleichsweise einfacher Herstellung erreicht, daß sowohl Quer- als auch Längskräfte zu keinerlei Verschiebung der Zuspannvorrichtung auf dem Bremsenträger führen können, so daß ein absolut formstabiler Sitz der Zuspannvorrichtung erreicht wird.

Alternativ oder zusätzlich zu den vorgenannten Verzahnungen ist es gemäß Anspruch 7 auch möglich, für den zusätzlichen Formschluß mindestens eine Lochringscheibe vorzusehen, die in eine entsprechende zylindrische Senkung in der Bohrung bzw. dem Innengewinde einer der Schrauben eingepaßt ist; da für derartige Lochringscheiben gegebenenfalls bzw. bei geeigneter Auslegung handelsübliche Beilagscheiben verwendet werden können, kann der erfindungsgemäße Formschluß auf diese Weise sehr preisgünstig erreicht werden. Auch die Montage ist vergleichsweise einfach. Jedoch kann die Montage gemäß der im Anspruch 8 angegebenen Weiterbildung gegebenenfalls noch weiter vereinfacht werden, daß die betreffende Lochringscheibe in der zugeordneten Senkung entweder der Anflanschfläche des Bremsenträgers oder der Befestigungsfläche der Zuspannvorrichtung befestigt wird. Eine derartige Befestigung kann beispielsweise mittels kleiner Schrauben oder auch durch Verschweißung erfolgen.

Weiterhin alternativ oder zusätzlich zu den vorgenannten Möglichkeiten zur Erzielung des erfindungsgemäßen Formschlusses ist es gemäß Anspruch 9 auch möglich, mindestens ein Paßfederelement vorzusehen, daß in eine entsprechend geformte Nut in der Anflanschfläche des Bremsenträgers und der Befestigungsfläche der Zuspannvorrichtung eingepaßt ist. Um die Montage dieses Paßfederelements zu erleichtern, empfiehlt es sich wie im Falle der Lochringscheibe, eine geeignete Befestigung des Paßfederelements in einer der beiden Nuten in Erwägung zu ziehen.

Als Alternative zur Verwendung eines Paßfederelements ist es darüberhinaus möglich, an der Anflanschfläche des Bremsenträgers oder der Befestigungsfläche der Zuspannvorrichtung einen Vorsprung vorzusehen, der in eine spiegelbildlich geformte Ausnehmung der Befestigungsfläche bzw. der Anflanschfläche eingreift. Falls nur ein derartiger Vorsprung vorgesehen wird, empfiehlt es sich gegebenenfalls, für diesen einen rechteckigen Querschnitt zu wählen, so daß sowohl Quer- als auch Längskräfte übertragen werden können.

Schließlich ist es gemäß Anspruch 11 auch möglich, den zusätzlichen Formschluß dadurch herbeizuführen, daß mindestens eine der Schrauben als Paßschraube ausgebildet wird. Aufgrund des begrenzten Querschnitts einer derartigen Paßschraube und aufgrund deren hoher Herstellungskosten werden erfindungsgemäß jedoch die vorgenannten Möglichkeiten zur Erzielung eines formschlusses bevorzugt.

Die Erfindung wird nachstehend anhand der Beschreibung von Ausführungsbeispielen unter Bezugnahme auf die Zeichnung näher erläutert. Es zeigen:
**Fig.1** eine erste Ausführungsform der Befestigungsvorrichtung, bei der der Formschluß durch Verzahnungen erzielt wird;
**Fig.2** eine Variante der Ausführungsform der Fig. 1, bei der der Winkel der jeweiligen Verzahnungen unterschiedlich gewählt ist;
**Figuren 3A und 3B** anhand einer Draufsicht bzw. eines Querschnitts eine weitere Ausführungsform der Befestigungsvorrichtung, bei der der Formschluß durch Verwendung zweier Lochringscheiben erzielt wird; und
**Figuren 4, 5 und 6** ein Paßfederelement bzw. in eine Ausnehmung ragende Vorsprünge, wobei diese Figuren einen Querschnitt entlang einer Linie A-A in Fig.7 darstellen.

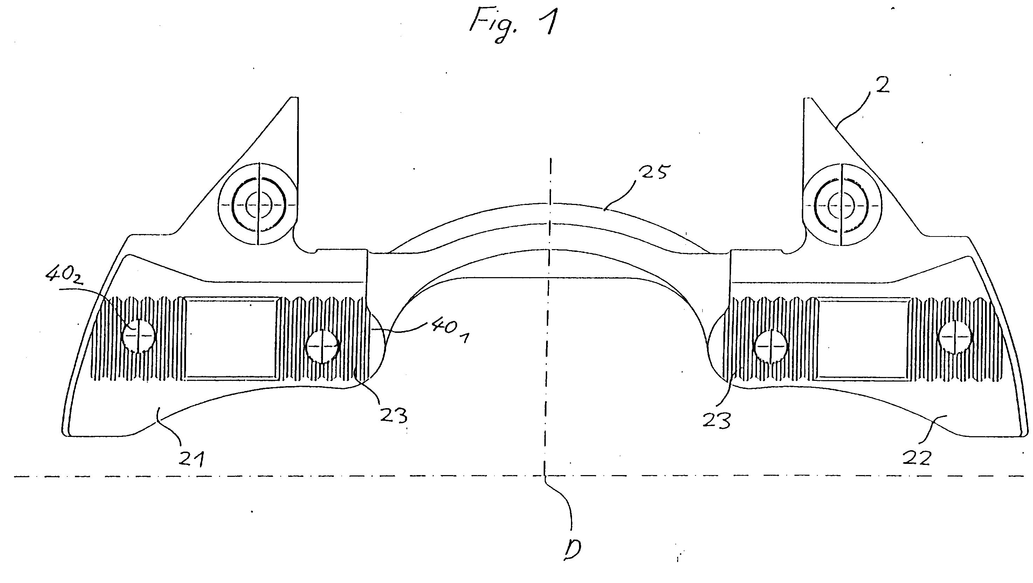

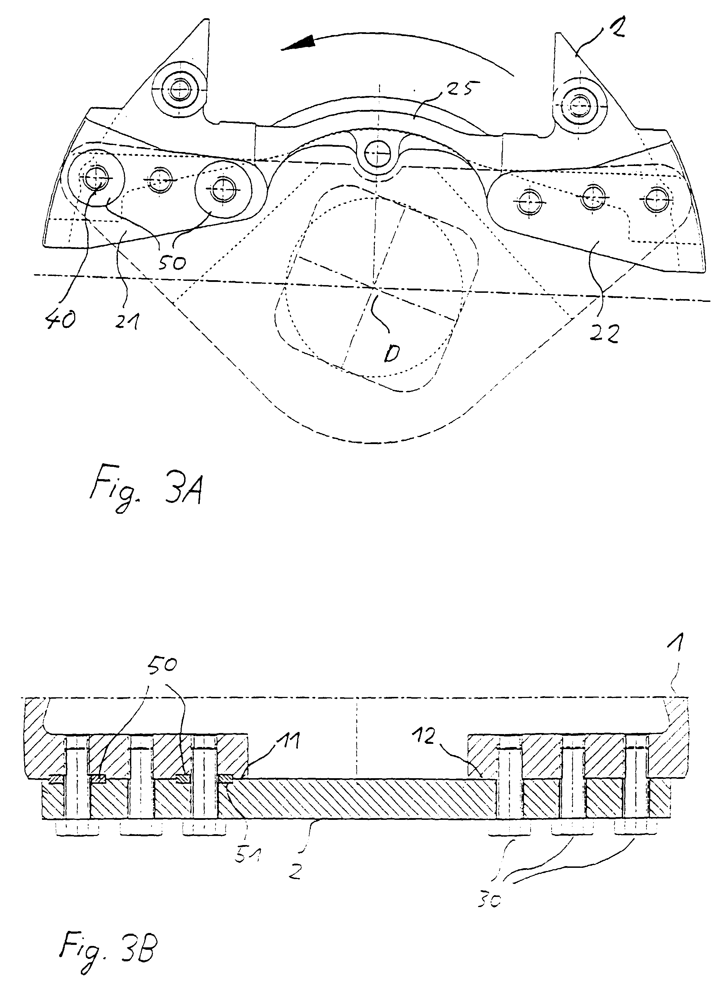

Fig.1 zeigt anhand einer Draufsicht auf einen Bremsenträger 2 eine erste Ausführungsform der erfindungsgemäßen Befestigungsvorrichtung. Dieser Bremsenträger 2 besteht im wesentlichen aus zwei Seitenteilen mit jeweiligen, im wesentlichen ebenen Anflanschflächen 21 bzw. 22, die über ein Brückenteil 25 miteinander verbunden sind. Wie insbesondere aus einem Vergleich mit Fig. 3A hervorgeht, übergreift der Bremsenträger 2 eine mit D bezeichnete Fahrzeugachse am Ort einer nicht näher gezeigten Bremsscheibe. Die am Bremsenträger 2 zu befestigende Zuspannvorrichtung der Scheibenbremse ist in der Querschnittsansicht der Fig. 3B schematisch mit dem Bezugszeichen 1 dargestellt. Demzufolge weist die Zuspannvorrichtung 1 zwei Befestigungsflächen 11 und 12 auf, die an den Verlauf der Anflanschflächen 21 bzw. 22 angepaßt sind. Darüberhinaus sind im Bereich der Anflanschflächen 21 und 22 Bohrungen vorgesehen, die bei aufliegender bzw. angekoppelter Zuspannvorrichtung mit entsprechenden Innengewinden der Befestigungsflächen 11 bzw. 12 fluchten. Hierdurch ist es möglich, die Zuspannvorrichtung 1 am Bremsenträger 2 mit Hilfe von Schrauben 30 zu befestigen. Wie aus einem Vergleich der in den Figuren 1 und 2 bzw. 3 dargestellten Ausführungsformen der Erfindung hervorgeht, empfiehlt es sich, je nach Anwendungsfall zwischen zwei und drei Schrauben pro Anflanschfläche zu verwenden. Gegebenenfalls kann bereits eine einzige Schraube ausreichend sein. Selbstverständlich ist es möglich, bei Bedarf die Bohrungen in den Befestigungsflächen der Zuspannvorrichtung 1 und die Innengewinde in den Anflanschflächen des Bremsenträgers 2 vorzusehen. Gegebenenfalls kann die Verschraubung auch unter zusätzlicher Verwendung von Muttern erfolgen.

Wie aus Fig.1 hervorgeht, wird der erfindungsgemäße Formschluß zwischen der Anflanschfläche des Bremsenträgers 2 und der Befestigungsfläche der Zuspannvorrichtung 1 in einer ersten Ausführungsform durch eine Verzahnung 23 gebildet, die in eine spiegelbildlich ausgebildete Gegenverzahnung der betreffenden Befestigungsfläche der Zuspannvorrichtung 1 in Eingriff steht. Die Zähne der Verzahnung 23 der Anflanschfläche 21 bzw. 22 velaufen im wesentlichen senkrecht zur Hauptrichtung der beim Bremsen auf den Bremsenträger 2 einwirkenden Kräfte; da die Drehachse der nicht gezeigten Bremsscheibe an dem mit D bezeichneten Ort liegt, wirkt als Hauptkomponente der Bremskraft nämlich eine Querkraft, die im wesentlichen durch die Mittelpunkte der beiden Bohrungen 40₁ und 40₂ verläuft. Demgemäß wird durch den in Fig.1 gezeigten Verlauf der Zähne erreicht, daß der hierdurch hervorgerufene Formschluß genau dieser Kraftrichtung entgegenwirkt und damit jegliche Verschiebung der Zuspannvorrichtung 1 auf den Bremsenträger 2 verhindert. Wie aus Fig.1 ferner hervorgeht, ist es gegebenenfalls ausreichend, die Verzahnung 23 lediglich im Umgebungsbereich der Bohrungen 40 vorzusehen. Darüberhinaus kann es unter Umständen ausreichend sein, die Verzahnung(en) lediglich auf der ablaufseitigen Anflanschfläche bzw. der ablaufseitigen Befestigungsfläche vorzusehen. Falls sich die Bremsscheibe in der in Fig. 3A mit dem Pfeil bezeichneten Richtung dreht, ist dies die in den Figuren 1, 2 und 3A mit 21 und in der Fig. 3B mit 11 bezeichnete Anflanschfläche bzw. Befestigungsfläche.

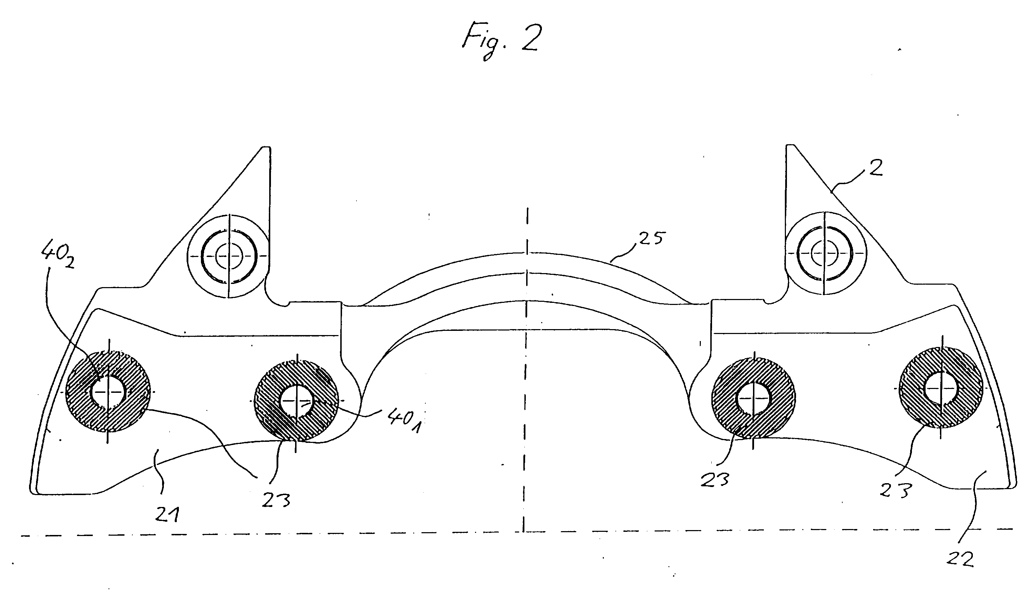

Bei der in Fig.2 gezeigten, abgewandelten Ausführungsform der Fig.1 sind die Verzahnungen 23 der Anflanschflächen 21 und 22 als Kreuzverzahnungen ausgebildet, die in entsprechend, spiegelbildlich ausgebildete Gegenverzahnungen der Befestigungsflächen 11 und 12 der Zuspannvorrichtung 1 eingreifen. Auf jeder Befestigungsfläche verläuft die linke Verzahnung im wesentlichen in einem 45-Grad-Winkel zur Hauptrichtung der Querkraft, d.h. zu der durch die Mittelpunkte der Bohrungen 40₁ und 40₂ verlaufenden Linie, während die rechte Verzahnung in einem entgegengesetzten 45-Grad-Winkel verläuft, d.h. senkrecht zur benachbarten Verzahnung ausgerichtet ist. Durch diese Anordnung wird erreicht, daß auch die in einem gewissen Maße auftretenden Längs- bzw. Radialkräfte wirksam abgefangen werden, so daß ein noch sichererer Sitz der Zuspannvorrichtung 1 erzielt wird.

In den Figuren 3A und 3B ist eine weitere Ausführungsform der Erfindung gezeigt, bei der der Formschluß mit Hilfe von zwei Lochringscheiben 50 erzielt wird, die in eine entsprechenden zylindrische Senkung 51 in der Bohrung in der Anflanschfläche 2 bzw. in eine entsprechende zylindrische Senkung 51 im Innengewinde der Befestigungsfläche der Zuspannvorrichtung 1 eingepaßt sind. Derartige Lochringscheiben sind einfach herzustellen und verursachen dementsprechend geringe Kosten. Gegebenenfalls können hierfür auch handelsübliche Beilagscheiben verwendet werden. Auch die Montage dieser Lochringscheiben 50 gestaltet sich einfach, da sie lediglich zusammen mit den Schrauben 30 bei der Montage eingeführt werden müssen. Zur noch leichteren Durchführung der Montage ist es gegebenenfalls möglich, die Lochringscheiben 50 in einer der beiden Senkungen beispielsweise mit Hilfe kleiner Schrauben oder durch Verschweißen permanent zu befestigen.

Obgleich in den Figuren 3A und 3B lediglich in den ablaufseitigen Flächen derartige Lochringscheiben 50 vorgesehen sind, ist es selbstverständlich auch möglich, entsprechende Lochringscheiben in den rechts dargestellten einlaufseitigen Flächen vorzusehen. Falls ausreichend Raum zur Verfügung steht, kann gegebenenfalls auch die mittlere Schraubverbindung mit einer derartigen Lochringscheibe ausgestattet werden.

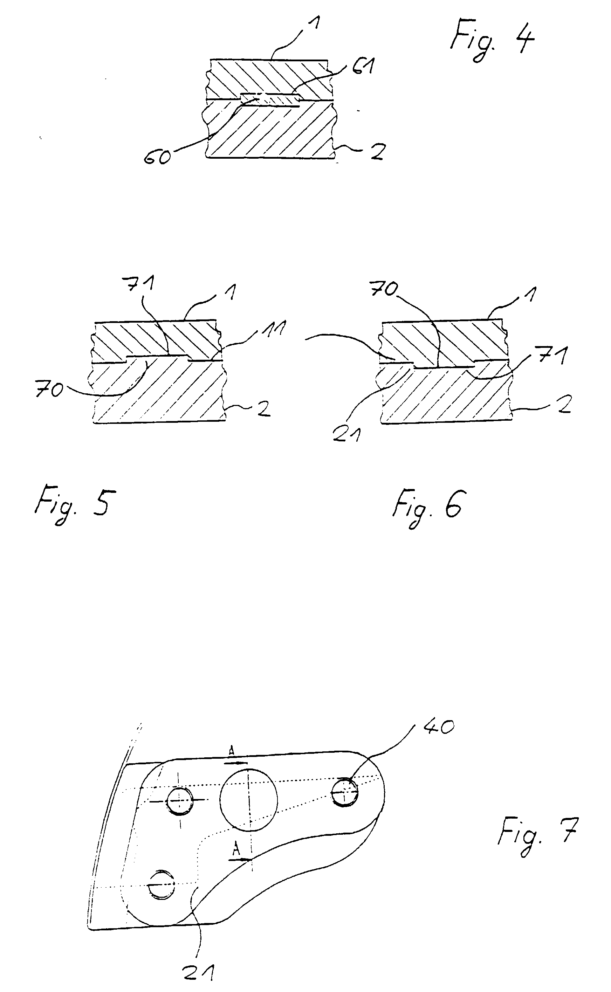

Gemäß Fig.4 kann der erfindungsgemäße Formschluß ebenfalls mittels eines Paßfederelements 60 erreicht werden. Dieses Paßfederelement 60 ist so ausgebildet, daß es in eine entsprechend geformte Nut 61 in der Anflanschfläche des Bremsenträgers 2 und der Befestigungsfläche 11 der Zuspannvorrichtung 1 eingepaßt werden kann. Wie aus der in Fig.7 gezeigten Draufsicht auf die linke Anflanschfläche 21 des Bremsenträgers 2 hervorgeht, kann ein derartiges Paßfederelement beispielsweise in einer geeigneten Mittenlage zwischen den Befestigungslöchern 50 angeordnet sein, die mit der strichpunktierten Linie A-A angedeutet ist. Obgleich aus Fig.7 hervorgeht, daß das Paßfederelement 60 kreisförmig ist, kann selbstverständlich auch ein rechteckförmiges Paßfederelement verwendet werden. Ein derartiges Element hat den Vorteil, sowohl in Quer- als auch in Längsrichtung eine hervorragende Abstützung bzw. einen guten Formschluß herbeizuführen, jedoch ist die Herstellung insbesondere der entsprechenden Nuten entsprechend schwieriger.

Bei der in den Figuren 5 und 6 gezeigten noch weiteren Variante der Erfindung kann der Formschluß schließlich auch durch Vorsprünge 70 gebildet werden, die entweder am Bremsenträger 2 (Fig.5) oder an der Befestigungsfläche der Zuspannvorrichtung 1 (Fig.6) ausgebildet sind. Diese Vorsprünge 70 greifen in eine spiegelbildlich geformte Ausnehmung 71 der Befestigungsfläche 11 bzw. der Anflanschfläche 21 ein. Auch diese Vorsprünge 70 und die entsprechenden Ausnehmungen 71 können entweder kreisförmig sein, was eine leichtere Herstellung erlaubt, oder zur Verbesserung des erzielbaren Formschlusses Rechteckform aufweisen.

Erfindungsgemäß ist es schließlich auch möglich, den gewünschten Formschluß durch Verwendung von Paßschrauben zu erzielen. Hierbei ist jedoch zu bedenken, daß derartige Paßschrauben wesentlich teuerer als herkömmliche Schrauben sind. Auch die Herstellung der Innengewinde ist mit entsprechend erhöhten Kosten verbunden. Darüberhinaus ist der erzielbare Formschluß geringer als bei den vorangehend beschriebenen Ausführungsformen der Erfindung, so daß diese bevorzugt verwendet werden.

Abschließend sei darauf hingewiesen, daß bei Bedarf auch eine Kombination der vorstehend erwähnten Ausführungsformen der Erfindung in Erwägung gezogen werden kann. Beispielsweise wäre es möglich, im Umgebungsbereich der Befestigungsschrauben Verzahnungen wie in Fig.l und Fig.2 gezeigt vorzusehen, während in dem dazwischenliegenden Bereich zusätzlich ein Paßfederelement oder eine Ausnehmung/Nut vorgesehen wird. Auch andere Kombinationen sind denkbar.

## Patentansprüche

1. Vorrichtung zur lösbaren Befestigung der Zuspannvorrichtung *(1)* einer Scheibenbremse an einem Fahrzeug, bei der ein fahrzeugseitiger, die entsprechende Fahrzeugachse übergreifender Bremsenträger *(2)* zwei ebene Anflanschflächen *(21, 22)* aufweist, mit denen zwei zugeordnete ebene Befestigungsflächen *(11, 12)* der Zuspannvorrichtung *(1)* in Anlage bringbar sind, um die Zuspannvorrichtung *(1)* an diesen mittels Schrauben *(30)* lösbar zu befestigen,
**dadurch gekennzeichnet,**
daß zumindest die ablaufseitige Anflanschfläche *(21)* des Bremsenträgers *(2)* über einen zusätzlichen Formschluß mit der ablaufseitigen Befestigungsfläche *(11)* der Zuspannvorrichtung *(1)* in Eingriff steht.

2. Vorrichtung nach Anspruch 1, **dadurch gekennzeichnet,** daß als zusätzlicher Formschluß eine in der betreffenden Anflanschfläche *(21, 22)* ausgebildete Verzahnung *(23)* vorgesehen ist, die mit einer spiegelbildlich ausgebildeten Gegenverzahnung der betreffenden Befestigungsfläche *(11)* der Zuspannvorrichtung *(1)* in Eingriff steht.

3. Vorrichtung nach Anspruch 2, **dadurch gekennzeichnet,** daß die Zähne der Verzahnung *(23)* der Anflanschfläche *(21, 22)* und dementsprechend die der Gegenverzahnung im wesentlichen senkrecht zur Hauptrichtung der beim Bremsen auf den Bremsenträger *(2)* einwirkenden Kräfte verlaufen (Fig.1).

4. Vorrichtung nach Anspruch 2, **dadurch gekennzeichnet,** daß die Verzahnung *(23)* der Anflanschfläche *(21, 22)* und dementsprechend die der Gegenverzahnung als Kreuzverzahnungen ausgebildet sind.

5. Vorrichtung nach einem der Ansprüche 2 bis 4, **dadurch gekennzeichnet**, daß die jeweiligen Verzahnungen *(23)* im jeweiligen Umgebungsbereich der Bohrungen bzw. Innengewinde *(40)* für die Schrauber *(30)* ausgebildet sind.

6. Vorrichtung nach Anspruch 5, **dadurch gekennzeichnet,** daß jede Befestigungsfläche *(11)* der Zuspannvorrichtung *(1)* mittels mindestens zweier Schrauben *(30)* an der zugeordneten Anflanschfläche des Bremsenträgers *(2)* befestigbar ist, wobei im Umgebungsbereich mindestens zweier dieser Schrauben jeweils Verzahnungen *(23)* ausgebildet sind, deren Zähne im wesentlichen in einem 45-Grad-Winkel zur Hauptrichtung der beim Bremsen auf den Bremsenträger *(2)* einwirkenden Kräfte und senkrecht zu denen der benachbarten Verzahnung verlaufen (Fig.2).

7. Vorrichtung nach Anspruch 1, **dadurch gekennzeichnet,** daß für den zusätzlichen Formschluß mindestens eine Lochringscheibe *(50)* vorgesehen ist, die in eine entsprechende zylindrische Senkung *(51)* in der Bohrung bzw. dem Innengewinde *(40)* einer der Schrauben *(30)* eingepaßt ist (Fig.3).

8. Vorrichtung nach Anspruch 7, **dadurch gekennzeichnet**, daß jede Lochringscheibe *(50)* in der zugeordneten Senkung *(51)* der Anflanschfläche des Bremsenträgers *(2)* oder der Befestigungsfläche *(11)* der Zuspannvorrichtung *(1)* befestigt ist.

9. Vorrichtung nach Anspruch 1, **dadurch gekennzeichnet**, daß für den zusätzlichen Formschluß mindestens ein Paßfederelement *(60)* vorgesehen ist, das in eine entsprechend geformte Nut *(61)* in der Anflanschfläche des Bremsenträgers *(2)* und der Befestigungsfläche *(11)* der Zuspannvorrichtung *(1)* eingepaßt ist (Fig.4).

10. Vorrichtung nach Anspruch 1, **dadurch gekennzeichnet**, daß für den zusätzlichen Formschluß mindestens ein Vorsprung *(70)* an der Anflanschfläche *(21)* des Bremsenträgers *(2)* oder der Befestigungsfläche *(11)* der Zuspannvorrichtung *(1)* vorgesehen ist, der in eine spiegelbildlich geformte Ausnehmung *(71)* der Befestigungsfläche *(11)* bzw. der Anflanschfläche eingreift (Fig.5, 6).

11. Vorrichtung nach Anspruch 1, **dadurch gekennzeichnet**, daß für den zusätzlichen Formschluß mindestens eine der Schrauben *(50)* als Paßschraube ausgebildet ist *(Fig.7).*

12. Vorrichtung nach Anspruch 1, **dadurch gekennzeichnet**, daß für den zusätzlichen Formschluß eine Kombination der in den Ansprüchen 2 bis 11 genannten Maßnahmen vorgesehen ist.

## Claims

1. Device for releasably fixing the tightening device (1) of a disc brake of a vehicle, in which a vehicle-mounted brake carrier (2) projecting over the corresponding vehicle axle has two level flanging surfaces (21, 22), into abutment with which two corresponding level fixing surfaces (11, 12) of the tightening device (1) can be introduced, in order to releasably fix the tightening device (1) to the carrier by means of screws (30),
characterised in that at least the trailing side flanging surface (21) of the brake carrier (2) is in engagement with the trailing side fixing surface (11) of the tightening device (1) via an additional positive-locking means.

2. Device according to claim 1, characterised in that as an additional positive-locking means teeth (23) are provided in the corresponding flanging surfaces (21, 22), which are in engagement with mirror-image opposing teeth of the corresponding fixing surface (11) of the tightening device (1).

3. Device according to claim 2, characterised in that the teeth (23) of the flanging surfaces (21, 22) and correspondingly the opposing teeth run essentially perpendicular to the principal direction of the forces acting on the brake carrier (2) during braking (Fig. 1).

4. Device according to claim 2, characterised in that the gearing (23) of the flanging surfaces (21, 22) and correspondingly the opposing teeth are formed as oblique teeth.

5. Device according to one of claims 2 to 4, characterised in that the respective teeth (23) are formed in the respective surrounding area of the bores or internal threads (40) for the screws (30).

6. Device according to claim 5, characterised in that each fixing surface (11) of the tightening device (1) can be fixed by means of at least two screws to the allocated flanging surface of the brake carrier (2), teeth (23) being formed in the surrounding area of at least two of these screws respectively, the teeth running essentially at a 45° angle to the principal direction of the forces acting on the brake carrier (2) during braking and perpendicular to those of the neighbouring teeth (Fig. 2).

7. Device according to claim 1, characterised in that for the additional positive-locking means at least one perforated annular disc (50) is provided, which is fitted in a corresponding cylindrical counter-bore (51) in the bore or internal thread of one of the screws (30) (Fig. 3).

8. Device according to claim 7, characterised in that each perforated annular disc (50) is fixed in the corresponding counter-bore (51) of the flanging surface of the brake carrier (2) or the fixing surface (11) of the tightening device (1).

9. Device according to claim 1, characterised in that for the additional positive-locking means at least one tongue element (60) is provided, which is fitted into a correspondingly formed groove (61) in the flanging surface of the brake carrier (2) and the fixing surface (11) of the tightening device (1) (Fig. 4).

10. Device according to claim 1, characterised in that for the additional positive-locking means at least one projection (70) is provided on the flanging surface (21) of the brake carrier (2) or the fixing surface (11) of the tightening device (1), which interlocks in a laterally reversed recess (71) of the fixing surface (11) or the flanging surface (Fig. 5, 6).

11. Device according to claim 1, characterised in that for the additional positive-locking means at least one of the screws (30) is constructed as a tight-fit screw (Fig. 7).

12. Device according to claim 1, characterised in that for the additional positive-locking means a combination of the measures given in claims 2 to 11 is provided.

## Revendications

1. Dispositif pour fixer, de façon amovible, le dispositif de serrage (1) d'un frein à disque sur un véhicule, selon lequel un support de frein (2), qui est situé côté véhicule et s'engage autour de l'essieu correspondant du véhicule, comporte deux surfaces de bridage (21,22) planes, contre lesquelles peuvent être mises en appui deux surfaces planes associées de fixation (11, 12) du dispositif de serrage (1), afin de fixer de façon amovible le dispositif de serrage (1) à ces surfaces à l'aide de boulons (30), caractérisé en ce qu'au moins la surface de bridage (21), située sur le côté tendu, du support de frein (2) est en prise, selon une liaison supplémentaire par formes complémentaires, avec la surface de fixation (11), située sur le côté tendu, du dispositif de serrage (1).

2. Dispositif selon la revendication 1, caractérisé en ce qu'il est prévu, en tant que système de liaison supplémentaire par formes complémentaires, une denture (23) formée dans la surface de bridage considérée (21,22) et qui est en prise avec une denture opposée symétrique de la surface de fixation considérée (11) du dispositif de serrage (1).

3. Dispositif selon la revendication 2, caractérisé en ce que les dents de la denture (23) de la surface de bridage (21,22) et, par conséquent, les dents de la denture opposée s'étendent essentiellement perpendiculairement à la direction principale des forces agissant sur le support de frein (2) lors du freinage (figure 1).

4. Dispositif selon la revendication 2, caractérisé en ce que la denture (23) de la surface de bridage (21,22) et, par conséquent, la denture opposée sont réalisées sous la forme de dentures croisées.

5. Dispositif selon l'une des revendications 2 à 4, caractérisé en ce que les dentures respectives (23) sont formées dans la zone environnante respective des perçages ou des taraudages (40) pour les boulons (30).

6. Dispositif selon la revendication 5, caractérisé en ce que chaque surface de fixation (11) du dispositif de serrage (1) peut être fixée à l'aide d'au moins deux boulons (30) à la surface de bridage associée du support de frein (2) et, dans la zone environnante d'au moins deux de ces boulons, sont formées respectivement des dentures (23), dont les dents s'étendent essentiellement en faisant un angle de 45 degrés par rapport à la direction principale des forces qui agissent sur le support de frein (2) lors du freinage, et sont perpendiculaires aux dents de la denture voisine (figure 2).

7. Dispositif selon la revendication 1, caractérisé en ce que pour la liaison supplémentaire par formes complémentaires, il est prévu au moins un disque annulaire perforé (50), qui est inséré dans un renfoncement cylindrique correspondant (51) aménagé dans le perçage ou dans le trou taraudé (40) pour l'un des boulons (30) (figure 3).

8. Dispositif selon la revendication 7, caractérisé en ce que chaque disque annulaire perforé (50) est fixé dans le renfoncement associé (51) de la surface de bridage du support de frein (2) ou de la surface de fixation (11) du dispositif de serrage (1).

9. Dispositif selon la revendication 1, caractérisé en ce que pour la liaison supplémentaire par formes complémentaires, il est prévu au moins un élément de clavette parallèle (60), qui est inséré dans une gorge de forme correspondante (61) aménagée dans la surface de bridage du support de frein (2) et la surface de fixation (11) du dispositif de serrage (1) (figure 4).

10. Dispositif selon la revendication 1, caractérisé en ce que pour la liaison supplémentaire par formes complémentaires, au moins une partie saillante (70) est prévue sur la surface de bridage (21) du support de frein (2) ou sur la surface de fixation (11) du dispositif de serrage (1), cette partie saillante s'engageant dans un évidement de forme symétrique (71) de la surface de fixation (11) ou, respectivement, de la surface de bridage (figures 5, 6).

11. Dispositif selon la revendication 1, caractérisé en ce que pour la liaison supplémentaire par formes complémentaires, au moins l'un des boulons (50) est réalisé sous la forme d'un boulon ajusté (figure 7).

12. Dispositif selon la revendication 1, caractérisé en ce que pour la liaison supplémentaire par formes complémentaires, il est prévu une combinaison des dispositions indiquées dans les revendications 2 à 11.
